Europäisches Patentamt

European Patent Office

Office européen des brevets

(19)

(11)  EP 1 000 901 B1

(12)  EUROPÄISCHE PATENTSCHRIFT

(45) Veröffentlichungstag und Bekanntmachung des Hinweises auf die Patenterteilung:
**07.08.2002 Patentblatt 2002/32**

(51) Int Cl.$^7$: **C01B 17/45**

(21) Anmeldenummer: **99121724.1**

(22) Anmeldetag: **03.11.1999**

(54) **Herstellung von Sulfurylfluorid**

Method for producing sulfuryl fluoride

Méthode de production de Fluorure de Sulfuryl

(84) Benannte Vertragsstaaten:
**AT BE CH CY DE DK ES FI FR GB GR IE IT LI LU MC NL PT SE**

(30) Priorität: **11.11.1998 DE 19851999**

(43) Veröffentlichungstag der Anmeldung:
**17.05.2000 Patentblatt 2000/20**

(73) Patentinhaber: **Solvay Fluor und Derivate GmbH 30173 Hannover (DE)**

(72) Erfinder:
• **Schulz, Alf 30900 Wedemark (DE)**

• **Rieland, Matthias, Dr. 30539 Hannover (DE)**
• **Hausmann, Eckhard 30519 Hannover (DE)**

(56) Entgegenhaltungen:
**DE-A- 2 643 521         DE-B- 1 000 354**

• **"Handbuch der Anorganischen Chemie, Schwefel, Teil B, Lieferung 3" 1963 , 8. AUFLAGE, VERLAG CHEMIE , WEINHEIM XP002130203 * Seite 1729 - Seite 1730 * & H. MOISSAN, P. LEBEAU: ANN. CHIM. PHYS., Bd. 26, Nr. 7, 1902, Seiten 145-178,**

**Beschreibung**

Die Erfindung bezieht sich auf ein Verfahren zur Herstellung von Sulfurylfluorid.

Sulfurylfluorid wird beispielsweise als Begasungsmittel zur Insektenbekämpfung verwendet. Es ist bereits bekannt, daß man Sulfurylfluorid aus Schwefeldioxid und Fluor in der Gasphase herstellen kann, siehe H. Moissan und P. Lebeau in Ann. Chim. Phys. [7] 26 (1902), Seiten 145 bis 178, insbesondere Seiten 159 bis 169. Diese Art der Herstellung ist aber sehr riskant, da es zu Explosionen kommen kann.

Die deutsche Offenlegungsschrift DE 26 43 521 A1 offenbart ein Verfahren zur Herstellung von Sulfurylfluorid, bei dem ein Gemisch aus Chlor und Schwefeldioxid zusammen mit Fluorwasserstoff über einen Erdalkalifluoridkatalysator geleitet wird. Dieser Katalysator kann auf einem Träger wie Aktivkohle vorliegen.

Aufgabe der vorliegenden Erfindung war es, ein Verfahren anzugeben, mit welchem Sulfurylfluorid in hoher Ausbeute und hoher Reinheit hergestellt werden kann. Diese Aufgabe wird durch das erfindungsgemäße Verfahren gelöst.

Das erfindungsgemäße Verfahren sieht vor, daß man Schwefeldioxid und elementares Fluor in Anwesenheit eines Alkalifluorids und Fluorwasserstoff miteinander umsetzt. Dabei liegt der Fluorwasserstoff in flüssiger Phase vor. Bevorzugt liegt das Alkalifluorid in Form einer Lösung im Fluorwasserstoff vor. Beispielsweise kann man das Alkalifluorid in HF gelöst einsetzen. Man kann es aber auch als Feststoff zu HF zusetzen, beispielsweise-auch als Precursor (z. B. als Carbonat). Es löst sich dann während der Umsetzung auf, bis es im HF gelöst ist.

Alkalifluorid steht für LiF, NaF, KF, CsF und RbF, vorzugsweise KF. Selbstverständlich kann das Alkalifluorid auch als HF-Addukt eingesetzt werden.

Das Fluor kann in reiner Form oder als Gemisch mit Inertgas (z. B. $N_2$, Ar etc.) eingesetzt werden.

Man arbeitet zweckmäßig im Temperaturbereich von -60 bis +50 °C, vorzugsweise bei -10 °C bis +20 °C. Der Druck liegt vorzugsweise im Bereich von Umgebungsdruck, d. h. etwa $10^3$ hPa (etwa 1 bar abs.) bis $10^4$ hPa (10 bar abs.).

Das Mol-Verhältnis zwischen $SO_2$ und $F_2$ liegt zweckmäßig im Bereich von 0,9:1 bis 1,1:1. Das Alkalifluorid liegt vorzugsweise in einer Menge von 1 bis 20 Gew.-% gelöst in der Reaktionsmischung vor. Der Fluorwasserstoff kann im stöchiometrischen Überschuß eingesetzt werden, er fungiert als Lösemittel für das Alkalifluorid.

Zur Aufarbeitung kann man beispielsweise überschüssiges HF aus den gasförmig abgeführten Reaktionsgemisch auskondensieren. Das nicht auskondensierte Reaktionsgemisch wird dann z. B. mit Wasserstoffperoxid enthaltendem Wasser gewaschen. Das verbleibende, reine $SO_2F_2$ wird dann getrocknet, komprimiert und in Stahlflaschen abgefüllt.

Das erfindungsgemäße Verfahren kann beispielsweise als Batch-Reaktion durchgeführt werden. Alternativ kann man auch kontinuierlich arbeiten, beispielsweise indem man einen Teil der Reaktionsmischung umlaufen läßt und gebildetes Sulfurylfluorid daraus isoliert (wie unter Aufarbeitung beschrieben). Auskondensierter Fluorwasserstoff wird rückgeführt.

Das erfindungsgemäße Verfahren weist den Vorteil auf, daß es sehr selektiv ist - es laufen kaum Nebenreaktionen ab. Die Umsetzung läuft schnell und vollständig ab, und das bei niedrigen Temperaturen.

Die folgenden Beispiele sollen die Erfindung weiter erläutern, ohne sie in ihrem Umfang einzuschränken.

<u>**Beispiel 1:**</u>

Herstellung von Sulfurylfluorid/Zweistufige Fluorzugabe

$$SO_2 + F_2 \rightarrow SO_2F_2$$

<u>Ansatz:</u>

| HF | 64 g |
|---|---|
| KF | 10 g (0,17 Mol) |
| $SO_2$ | 11 g (0,17 Mol) |
| $F_2$ | 3,8 l (0,17 Mol) |

<u>Durchführung:</u>

KF wurde im 300 ml-Autoklaven vorgelegt, und bei Eiskühlung HF zudosiert. Dabei wurde starke Wärmetönung beobachtet, die Temperatur im Autoklaven stieg von 2 °C auf 24 °C.

Nach Abkühlung auf 0 °C erfolgte die Zugabe von $SO_2$. Es war keine Wärmetönung festzustellen. Anschließend wurde bis zu einem Druck von $6 \cdot 10^3$ hPa (6 bar) $F_2$ (entsprechend der ½ stöchiometrischen Menge) zudosiert. Anschließend ließ man die Reaktionsmischung auf 21 °C kommen [Druck $6 \cdot 10^3$ hPa (6 bar)].

Im Ölbad wurde die Reaktionsmischung auf 40 °C erwärmt. Es konnte kein Druckanstieg registriert werden. Dann wurde die Reaktionsmischung mit Trockeneis eingekühlt [bei -59 °C betrug der Druck ca. $2 \cdot 10^3$ hPa (2 bar)], und erneut $F_2$ eingespeist bis zu einem Druck von $7 \cdot 10^3$ hPa (7 bar). Das Kältebad wurde entfernt, bei 23 C° betrug der Druck im Autoklaven $7 \cdot 10^3$ hPa (7 bar). Erneut wurde der Autoklaveninhalt auf 40 °C erwärmt (keine Druckerhöhung). Anschließend wurde auf -76 °C gekühlt. Der Druck betrug jetzt $10^3$ hPa (1 bar).

10 mal wurde der Druck im Autoklaven mit $N_2$ auf $5 \cdot 10^3$ hPa (5 bar) gebracht und jeweils abgepurcht.

Bei 22 °C betrug der Druck $5 \cdot 10^3$ hPa (5 bar). Das Reaktionsgas wurde durch KI-Lösung geleitet. Da keine Verfärbung beobachtet wurde, war kein $F_2$ im Reaktionsgas enthalten.

Das Reaktionsgemisch wurde gaschromatographisch untersucht (GC/MS).

Ergebnis:

| Total Area | 1294930 | | |
|---|---|---|---|
| **RetTime** | **Area** | **Area %** | **Name** |
| 3,19 | 561350 | 43,383 | Luft |
| 3,31 | 15766 | 1,219 | $SF_6$ |
| 3,42 | 48575 | 3,754 | $CO_2$ |
| 3,51 | 644997 | 49,848 | $SO_2F_2$ |
| 3,75 | 8716 | 0,674 | $SOF_2$ |
| 3,91 | 2265 | 0,175 | -- |
| 4,05 | 91 | 0,007 | -- |
| 4,76 | 9267 | 0,716 | $SO_2$ |
| 10,74 | 1837 | 0,142 | 113 |
| 13,58 | 1066 | 0,082 | -- |

**Beispiel 2:**

Herstellung von Sulfurylfluorid/Einstufige Fluorzugabe

Ansatz:

| HF | 50 g |
|---|---|
| KF | 5 g (0,08 Mol) |
| $SO_2$ | 6 g (0,09 Mol) |
| $F_2$ | 1,9 l (0,09 Mol) |

Durchführung:

HF, KF und $SO_2$ wurden vorgelegt. Nach Zudosierung von 6 bar $F_2$ leichte Wärmetönung beobachtet, die Temperatur der Reaktionsmischung stieg von 2 °C auf 7 °C.

Nach einer Stunde war der Druck auf $2,5 \cdot 10^3$ hPa (2,5 bar) gefallen [(bei 20 °C $2,8 \cdot 10^3$ hPa (2,8 bar)]. Eine Gasprobe über trockenem KI zeigt keine Verfärbung; dies belegt, daß kein $F_2$ in der Gasprobe enthalten war.

Anschließend wurde das Gas durch eine Waschflasche mit wäßriger KF-Lösung in Gasmaus geleitet und GC/MS aufgenommen.

Ergebnis:

| Total Area | 1119065 | | |
|---|---|---|---|
| **RetTime** | **Area** | **Area %** | **Name** |
| 3,17 | 653122 | 58,363 | Luft |
| 3,29 | 2603 | 0,233 | $SF_6$ |
| 3,41 | 3577 | 0,320 | $CO_2$ |
| 3,49 | 453955 | 40,566 | $SO_2F_2$ |
| 3,74 | 5770 | 0,516 | |
| 3,91 | 38 | 0,003 | |

**Beispiel 3:**

Herstellung von Sulfurylfluorid mit LiF

Ansatz:

| HF | 55 g |
|---|---|
| LiF | 2,6 g (0,1 Mol) |
| $SO_2$ | 10 g (0,1 Mol) |
| $F_2$ | 1,9 l (0,1 Mol) |

Durchführung:

LiF wurde im Autoklaven vorgelegt und unter Eiskühlung HF, $SO_2$ und Fluor [$7 \cdot 10^3$ hPa (7 bar)] zugegeben. Die Reaktionsmischung ließ man über Nacht stehen, dann wurde sie 1 Stunde bei 40 °C gehalten. Die Reaktionsmischung wurde 10 x mit je $5 \cdot 10^3$ hPa (5 bar) Stickstoff befüllt und abgepurcht. Die verbleibende Reaktionsmischung wurde durch GC untersucht.

Ergebnis:

| Total Area | 1446847 | | |
|---|---|---|---|
| **RetTime** | **Area** | **Area %** | **Name** |
| 3,17 | 603814 | 41,733 | Luft |
| 3,29 | 1330 | 0,092 | $SF_6$ |
| 3,41 | 9602 | 0,664 | $CO_2$ |
| 3,48 | 809773 | 55,968 | $SO_2F_2$ |
| 3,73 | 3404 | 0,235 | $SOF_2$ |
| 3,88 | 11 | 0,011 | -- |
| 3,92 | 7 | 0,001 | -- |
| 4,04 | 412 | 0,029 | -- |
| 4,59 | 16895 | 1,168 | $H_2O$ |
| 4,75 | 1599 | 0,111 | $SO_2$ |

Vergleichsbeispiel:

Herstellung von Sulfurylfluorid ohne Alkalifluorid

Reaktion:

$$SO_2 + F_2 \rightarrow SO_2F_2$$

Ansatz:

| HF | 58 g |
|---|---|
| $SO_2$ | 8 g (0,09 Mol) |
| $F_2$ | 3 g (0,08 Mol) |

Durchführung:

Im Autoklaven wurden HF und $SO_2$ unter Eiskühlung vorgelegt und Fluor zugegeben [$7 \cdot 10^3$ hPa (7 bar)]. Die Reaktionsmischung ließ man über Nacht stehen und dann - nach Durchleiten durch KF-Wasser - durch GC untersucht. Das GC belegt einen hohen Gehalt an $SOF_2$.

Ergebnis:

| Total Area | 1058218 | | |
|---|---|---|---|
| **RetTime** | **Area** | **Area %** | **Name** |
| 3,17 | 631714 | 59,696 | Luft |
| 3,29 | 1165 | 0,110 | $SF_6$ |
| 3,41 | 3243 | 0,307 | $CO_2$ |
| 3,50 | 391816 | 37,026 | $SO_2F_2$ |
| 3,74 | 29889 | 2,824 | $SOF_2$ |
| 4,75 | 92 | 0,009 | $SO_2$ |
| 6,88 | 299 | 0,028 | -- |

**Patentansprüche**

1. Verfahren zur Herstellung von Sulfurylfluorid, wobei man Schwefeldioxid und elementares Fluor in Anwesenheit eines Alkalifluorids und flüssigem Fluorwasserstoff unter Bildung von Sulfurylfluorid umsetzt.

2. Verfahren nach Anspruch 1, **dadurch gekennzeichnet, daß** das Alkalifluorid in Fluorwasserstoff gelöst eingesetzt wird.

3. Verfahren nach Anspruch 1 oder 2, **dadurch ge-**

**kennzeichnet, daß** man bei einer Temperatur im Bereich von -60 bis +50 °C arbeitet.

4. Verfahren nach Anspruch 1, **dadurch gekennzeichnet, daß** Alkalifluorid und Fluorwasserstoff sowie Schwefeldioxid vorliegt und man in das Gemisch elementares Fluor einleitet.

5. Verfahren nach Anspruch 1, **dadurch gekennzeichnet, daß** man als Alkalifluorid Kaliumfluorid einsetzt.

6. Verfahren nach Anspruch 1, **dadurch gekennzeichnet, daß** man das Verfahren kontinuierlich unter Kreislaufführung von einem Teil des Reaktionsgemisches durchführt.

**Claims**

1. A process for the preparation of sulphuryl fluoride, wherein sulphur dioxide and elemental fluorine are reacted in the presence of an alkali fluoride and liquid hydrogen fluoride to form sulphuryl fluoride.

2. A process according to Claim 1, **characterised in that** the alkali fluoride is used dissolved in hydrogen fluoride.

3. A process according to Claim 1 or 2, **characterised in that** one operates at a temperature in the range from -60 to +50°C.

4. A process according to Claim 1, **characterised in that** alkali fluoride and hydrogen fluoride and also sulphur dioxide are initially introduced and elemental fluorine is introduced into the mixture.

5. A process according to Claim 1, **characterised in that** potassium fluoride is used as the alkali fluoride.

6. A process according to Claim 1, **characterised in that** the process is performed continuously, with part of the reaction mixture being recirculated.

**Revendications**

1. Procédé de préparation de fluorure de sulfuryle, dans lequel on fait réagir du dioxyde de soufre et du fluor élémentaire en présence d'un fluorure alcalin et de fluorure d'hydrogène liquide formant ce faisant du fluorure de sulfuryle.

2. Procédé selon la revendication 1, **caractérisé en ce que** le fluorure alcalin est utilisé dissous dans le fluorure d'hydrogène.

**3.** Procédé selon la revendication 1 ou 2, **caractérisé en ce que** l'on travaille à une température dans la gamme de -60 °C à +50 °C.

**4.** Procédé selon la revendication 1, **caractérisé en ce que** le fluorure alcalin et le fluorure d'hydrogène, ainsi que le dioxyde de soufre, sont déjà présents, et **en ce que** l'on introduit du fluor élémentaire dans le mélange.

**5.** Procédé selon la revendication 1, **caractérisé en ce que** l'on utilise du fluorure de potassium en tant que fluorure alcalin.

**6.** Procédé selon la revendication 1, **caractérisé en ce que** l'on exécute le procédé continuellement en recylant une partie du mélange réactionnel.